# EUROPEAN PATENT APPLICATION

(11) **EP 3 719 049 A1**
(43) Date of publication of application: **07.10.2020**
(21) Application number: 18884305.6
(22) Date of filing: 29.10.2018
(51) Int. Cl.: C08G 59/18, C08K 3/12, C08K 3/22, C08K 5/057

(54) **METHOD FOR PRODUCING POLYAMIDE USING TERMINAL ENCAPSULANT AND POLYAMIDE PRODUCED THEREBY**

(30) Priority: 28.11.2017 KR 20170160737
(71) Applicant: Hanwha Solutions Corporation, Jung-gu Seoul 04541 (KR)
(72) Inventor: YIM, Kyoung Won, Gwangju 500-825 (KR); DO, Seung Hoe, Daejeon 34090 (KR); LEE, Jin Seo, Seongnam-si Gyeonggi-do 13531 (KR); LEE, Hye Yeon, Seoul 08807 (KR); KIM, Dae Hak, Seongnam-si Gyeonggi-do 13625 (KR); KIM, Do Kyoung, Busan 46320 (KR); KWON, Kyung Ho, Daegu 41051 (KR)
(74) Representative: Klunker, Hans-Friedrich
(86) International application number: PCT/KR2018/012908
(87) International publication number: WO 2019/107755

(57) **Abstract**

The present invention provides a method for producing a polyamide using an end-capping agent and a polyamide produced thereby, wherein the method is an eco-friendly process method without using a solvent as a catalyst and can prepare, by using an end-capping agent for suppressing side reaction, a polymer having a uniform molecular weight and a high conversion rate at a low temperature within a short polymerization time in comparison with a conventional polymerization method.

## Description

### TECHNICAL FIELD

The present invention relates to a method for producing a polyamide using an end-capping agent (terminal encapsulant) and a polyamide produced thereby, and more particularly, to a method for producing a polyamide using an end-capping agent and a polyamide produced thereby, wherein the method is an eco-friendly process method without using a solvent as a catalyst and can prepare, by using an end-capping agent for suppressing side reaction, a polymer having a uniform molecular weight and a high conversion rate at a low temperature within a short polymerization time in comparison with a conventional polymerization method.

### BACKGROUND ART

A polyamide resin is a linear polymer bonded by an amide (-NHCO-) bond. The polyamide resin is strong, has excellent physical properties in terms of friction resistance, abrasion resistance, oil resistance, and solvent resistance, and is easily melt-molded. Therefore, the polyamide resin is widely used as clothing materials, fibers for industrial materials, engineering plastics, and the like. Polyamides may be classified into aliphatic polyamides, aromatic polyamides, and aliphatic cyclic polyamides according to molecular structures. The aliphatic polyamides may be collectively referred to as nylon, and the aromatic polyamides may be collectively referred to as aramid.

Polyamides are produced by various polymerization methods and may be classified into those produced by ring-opening polymerization of lactam, such as nylon 6, those produced by polycondensation of diamines and dibasic acids, such as nylon 6,6, nylon 6,10 and nylon 4,6, and those produced by polycondensation of aminocarboxylic acids, such as nylon 11 and nylon 12. Furthermore, so-called hybrid polymerized nylons, such as hybrid condensates of caprolactam and 6,10-nylon salts (hexamethylenediamine and sebacate), are industrially produced, and various polyamides including functional groups such as side chains and hydroxyl groups, aromatic rings and, hetero rings in molecules have been studied.

Lactams, for example, caprolactam may be anionically polymerized. This method generally uses a catalyst and an initiator (also referred to as an activator) (activated anionic polymerization). Initiators or activators frequently used till now include diisocyanates or derivatives thereof.

US Patent No. 4,754,000 (Bayer AG) discloses activated anionic polymerization of lactams, which produces polyamides using biuret-group-containing polyisocyanates derived from non-aromatic diisocyanates as an activator.

EP 1091991 (BASF AG) discloses a composition including polyisocyanurates having more than 3.5 NCO functional groups on average as a component A and a method for preparing a surface coating composition using the composition.

In US Patent No. 3,423,372, uncapped polyisocyanates are used (resulting in a significant reduction in reactivity), and an activator concentration in that example is very low (1/200 mol to 1/50 mol). Polymerization takes more than 3 minutes at the concentration used in this US patent.

In EP 0156129, a rubber (i.e., elastomer) is used as a precursor of a multifunctional activator. Therefore, the resulting PA is up to 1.12 GPa and is not rigid. The activator has a high weight average molecular weight (Mw). In this case, a large amount of activator is required (20% or more). A mixture of a bifunctional activator and a multifunctional activator is used. Therefore, the resulting polyamide is not a crosslinked material.

In addition, US Patent No. 4,067,861 (1978) discloses a technology for anionic polymerization of lactams through an extruder. A metering pump is installed between an extruder body and an extruder die so as to obtain a constant output and uniform viscosity and physical properties. Although attempting to mechanically solve viscosity non-uniformity, this is not a fundamental solution.

U.S. Patent No. 3,878,173 (1975) points out the problem of unstable viscosity due to thermal decomposition and the formation of a structurally disorderly branching structure. However, in order to prevent decomposition of a synthesized polymer, an attempt to solve the problem is made just by using a more acidic additive. This US patent does not disclose the solution to the non-uniform branching structure. For reference, a branching side reaction that occurs during polyamide anion polymerization is discussed in detail in M. P. Stevens, "Polymer Chemistry", 2nd Ed., Oxford University Press, p 429 (1990) and G. Odian, "Principles of Polymerization", 2nd Ed., John Wiley & Sons, p541 (1981).

In particular, in US Patent No. 5,747,634 (1998), a solution liquid system containing a catalyst and an initiator (reaction accelerator) at the same time is introduced so as to obtain a more uniform product. US Patent No. 5,747,634 discloses that the solution liquid system is introduced to obtain uniform products with a constant quality and a high reproducibility result, but there is a problem that is not efficient due to a problem of solvent removal when applying to a reaction extrusion method.

### DESCRIPTION OF EMBODIMENTS

### TECHNICAL PROBLEM

The present invention aims to solve the above-described problems of the related art and the technical problems requested from the past.

An object of the present invention is to provide a method for producing a polyamide using an end-capping agent and a polyamide produced thereby, wherein the method is an eco-friendly process method without using a solvent as a catalyst and can prepare, by using an end-capping agent for suppressing side reaction, a polymer having a uniform molecular weight and a high conversion rate at a low temperature within a short polymerization time in comparison with a conventional polymerization method.

In addition, another object of the present invention is to provide a method for producing a polyamide using an end-capping agent and a polyamide produced thereby, wherein an end-capping agent containing an amine group or an alcohol group for suppressing side reaction occurring during an anionic reaction is included, thereby improving heat-resistance stability and processability.

### SOLUTION TO PROBLEM

In order to achieve the objects, the present invention provides a method for producing a polyamide using an end-capping agent.

The method is a method for producing a polyamide by an anionic polymerization reaction using an end-capping agent, wherein

lactam, and based on 100 parts by weight of the entire lactam, 0.01 parts by weight to 20 parts by weight of an alkali metal as an initiator, 0.002 parts by weight to 1.0 part by weight of an activator, and 0.1 parts by weight to 100 parts by weight of an end-capping agent including at least one selected from the group consisting of an amine-based, urea-based, or alcohol-based material and any compound thereof are included.

Therefore, a polymer having a uniform molecular weight can be prepared by effectively suppressing side reaction occurring during anionic polymerization of lactam.

In one preferred embodiment of the present invention, the end-capping agent may include at least one selected from the group consisting of compounds represented by Formulae 1 and 2:

[Formula 1] R₁(CH₂)ₓR₂(CH₂)_{y}R₃

wherein R₁, R₂, and R₃ are each independently a primary, secondary, tertiary, or quaternary amine, alcohol, amide, ether, alkyl, or aryl, and x, y, or z is an integer from 1 to 20,

[Formula 2] R₁(CH₂)ₓR₂(CH₂)_{y}R₃(CH₂)_{z}R₄

wherein R₁, R₂, R₃, and R₄ are each independently a primary, secondary, tertiary, or quaternary amine, alcohol, amide, ether, alkyl, or aryl, and x, y, or z is an integer from 1 to 20.

In one preferred embodiment of the present invention, the polymerization may be performed in a temperature range of 140°C to 250°C.

In one preferred embodiment of the present invention, the activator may be carbon dioxide (CO₂), but the present invention is not limited thereto. For example, the activator may include at least one selected from the group consisting of benzoyl chloride, N-acetyl caprolactam, N-acetyl laurolactam, octadecyl isocyanate (SIC), toluene diisocyanate (TDI), hexamethylene diisocyanate (HDI), and any mixture thereof.

In one preferred embodiment of the present invention, the end-capping agent may include at least one selected from the group consisting of aliphatic amine, aromatic amine, aliphatic urea, aromatic urea, aliphatic alcohol, and aromatic alcohol-based compound.

In one preferred embodiment of the present invention, when the end-capping agent is aliphatic amine, the end-capping agent may include 0.001 mol% to 0.5 mol% relative to the lactam.

In one preferred embodiment of the present invention, an N/C ratio of the amine-based end-capping agent may be in a range of 0.05 to 1.0.

In one preferred embodiment of the present invention, an O/C ratio of the urea-based end-capping agent may be in a range of 0.05 to 1.0.

In one preferred embodiment of the present invention, an O/C ratio of the alcohol-based end-capping agent may be in a range of 0.05 to 1.0.

In one preferred embodiment of the present invention, the alkali metal may include at least one selected from the group consisting of metal hydride, metal hydroxide, and metal alkoxide.

In one preferred embodiment of the present invention, at least one selected from the group consisting of ethylene-bis-stearamide (EBS), an amine compound, a urea compound, and a di-urea compound, which are a molecular weight controller, may be further included.

In one preferred embodiment of the present invention, the polymerization reaction may be performed within a range of 0.5 minutes to 120 minutes based on an experimental reactor. The polymerization reaction time is not particularly limited and may be appropriately adjusted according to a weight of a compound introduced or a size and a type of the reactor.

In one preferred embodiment of the present invention, the lactam in the polymerization reaction may have a conversion rate of 95% or more.

The present invention provides a polyamide produced by the above-described method. The polyamide may have a polydispersity index (PDI) of 3.0 or less.

In one preferred embodiment of the present invention, a weight average molecular weight (Mw) of the polyamide may be in a range of 20,000 to 80,000.

In addition, the present invention provides a parts material selected from the group consisting of a vehicle material, an electronic device material, an industrial pipe material, a construction engineering material, a 3D printer material, a textile material, a cladding material, a machine tool material, a medical material, an aviation material, a photovoltaic material, a battery material, a sports material, a household appliance material, a household material, and a cosmetic material, which each include the polyamide.

In a specific example, a product including the parts material may be vehicle air ducts, plastic/rubber compounds, adhesives, lights, polymer optical fibers, fuel filter caps, line systems, cables for electronic devices, reflectors, sheaths of cables, optical fibers, wire protection tubes, control units, pipe tubes, liners, pipe coatings, oilfield exploration hoses, 3D printers, multifilaments, spray hoses, valves, ducts, pulps, gears, medical catheters, flame retardants for aircraft, solar cell protection plates, cosmetic materials, high hardness films, ski boots, headsets, glasses frames, toothbrushes, water bottles, or outsoles, but the present invention is not limited thereto.

### ADVANTAGEOUS EFFECTS OF DISCLOSURE

As described above, the present invention is an eco-friendly process method without using a solvent as a catalyst and can prepare, by using an end-capping agent for suppressing side reaction, a polymer having a uniform molecular weight and a high conversion rate at a low temperature within a short polymerization time in comparison with a conventional polymerization method.

In addition, according to the present invention, an end-capping agent containing an amine group or an alcohol group for suppressing side reaction occurring during an anionic reaction is included, thereby improving heat-resistance stability and processability.

### BRIEF DESCRIPTION OF DRAWING

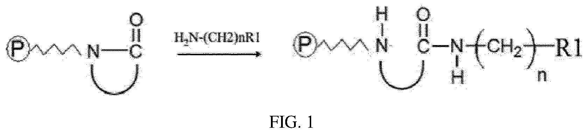

FIG. 1 is a reaction formula showing a process of converting an unstable structure of an end-capping agent and a polymer according to the present invention into a stable structure.

### BEST MODE

The present invention will be described with reference to specific embodiments and the accompanying drawings. The embodiments will be described in detail in such a manner that the present invention may be carried out by those of ordinary skill in the art. It should be understood that various embodiments of the present invention are different, but need not be mutually exclusive. For example, certain shapes, structures, and features described herein may be implemented in other embodiments without departing from the spirit and scope of the present invention in connection with one embodiment.

Therefore, the following detailed description is not to be taken in a limiting sense, and the scope of the present invention is to be limited only by the appended claims and the entire scope of equivalents thereof, if properly explained.

In addition, unless otherwise specified in the present specification, the term "substitution" or "substituted" means that one or more hydrogen atoms in the functional groups of the present invention are substituted with one or more substituents selected from the group consisting of a halogen atom (-F, -Cl, -Br, or -I), a hydroxy group, a nitro group, a cyano group, an amino group, an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group. These substituents may be linked to each other to form a ring.

In the present invention, unless otherwise specified, the term "substituted" means that a hydrogen atom is substituted with a substituent such as a halogen atom, a C₁-C₂₀ hydrocarbon group, a C₁-C₂₀ alkoxy group, and a C₆-C₂₀ aryloxy group.

In addition, unless otherwise specified, the term "hydrocarbon group" refers to a linear, branched, or cyclic saturated or unsaturated hydrocarbon group. The alkyl group, the alkenyl group, the alkynyl group, and the like may be linear, branched, or cyclic.

In addition, unless otherwise specified in the present specification, the term "alkyl group" refers to a C₁-C₃₀ alkyl group and the term "aryl group" refers to a C₆-C₃₀ aryl group. In the present specification, the term "heterocyclic group" refers to a group in which one to three heteroatoms selected from the group consisting of O, S, N, P, Si, and any combination thereof are contained in one ring. Examples of the heterocyclic group may include pyridine, thiophene, and pyrazine, but the present invention is not limited thereto.

Hereinafter, embodiments of the present invention will be described with reference to the accompanying drawings, so that those of ordinary skill in the art can easily carry out the present invention.

As described above, there have been limitations in limiting the inefficiency of the processing, which is caused by the problems occurring in hydrolytic polymerization, catalytic ring-opening polymerization, and anionic ring-opening polymerization among the conventional polyamide polymerization methods, and the increase in viscosity due to side reactions at high temperature polymerization.

The present invention is an eco-friendly processing method that uses an amine-based or alcohol-based end-capping agent to control side reaction occurring at the time of producing polyamide anion and uses carbon dioxide (CO2) instead of a solvent as a catalyst, and can prepare a polymer having a uniform molecular weight with a high conversion rate within a short polymerization reaction time at a low temperature in comparison with an existing polymerization method, thereby providing the solution to the above-described problems.

The present invention provides a method for producing a polyamide by an anionic polymerization reaction using an end-capping agent, wherein lactam, and based on 100 parts by weight of the entire lactam, 0.01 parts by weight to 20 parts by weight of an alkali metal as an initiator, 0.002 parts by weight to 10 parts by weight of carbon dioxide as an activator, and 0.1 parts by weight to 50 part by weight of an amine-based, urea-based, or alcohol-based end-capping agent are included.

Specifically, compositions included in the production of the polyamide using the end-capping agent according to the present invention will be described below.

First, the lactam according to the present invention may be preferably used as a monomer for producing the polyamide. However, the present invention is not limited thereto. For example, the lactam may include laurolactam, caprolactam, piperidone, pyrrolidone, enantolactam, and caprylactam. In some cases, the lactam may include propiolactam, 2-pyrrolidone, valerolactam, caprolactam, heptanolactam, octanolactam, nonanolactam, decanolactam, undecanolactam, and dodecanolactam.

In addition, the alkali metal catalyst according to the present invention is an initiator for producing the polyamide and may include at least one selected from the group consisting of metal hydride, metal hydroxide, and metal alkoxide as a compound that allows the formation of the lactam anion.

In a specific example, the metal hydride may include sodium hydride and potassium hydride, the metal hydroxide may include sodium hydroxide and potassium hydroxide, and the metal alkoxide may include potassium tert-butoxide and aluminum isopropoxide, but the present invention is not limited thereto.

For example, the metal alkoxide may include sodium caprolactamate or potassium caprolactamate, alkaline earth metal caprolactamate, for example, magnesium bromide caprolactamate, magnesium chloride caprolactamate, or magnesium biscaprolactamate, an alkali metal, for example, sodium or potassium, alkali metal base, for example, sodium base, for example sodium hydride, sodium, sodium hydroxide, sodium methanolate, sodium ethanolate, sodium propanolate, or sodium butanolate, or at least one selected from the group consisting of potassium base, for example potassium hydride, potassium, potassium hydroxide, potassium methanolate, potassium ethanolate, potassium propanolate, potassium butanolate, or any mixture thereof, preferably at least one selected from the group consisting of sodium caprolactate, potassium caprolactate, magnesium bromide caprolactate, magnesium chloride caprolactate, magnesium biscaprolactate, sodium hydride, sodium, sodium hydroxide, sodium ethanolate, sodium methanolate, sodium propanolate, sodium butanolate, potassium hydride, potassium, potassium hydroxide, potassium methanolate, potassium ethanolate, potassium propanolate, potassium butanolate, and any mixture thereof. In addition, at least one selected from the group consisting of sodium hydride, sodium, sodium caprolactamate, and any mixture thereof may be included.

The metal catalyst may be used in the form of a solid or a solution, and the catalyst is preferably used in the form of a solid. The catalyst is preferably added to a caprolactam melt in which the catalyst can be dissolved. These catalysts lead to particularly rapid reactions, thereby increasing the efficiency of the process of producing the polyamide according to the present invention.

According to the present invention, an amount of the alkali metal catalyst may be in a range of 0.01 parts by weight to 20 parts by weight based on 100 parts by weight of the entire lactam. The amount of the alkali metal catalyst may be in a range of preferably 0.03 parts by weight to 10 parts by weight, and more preferably 0.05 parts by weight to 2 parts by weight.

In this case, when the alkali metal catalyst is added in an amount of less than 0.01 parts by weight, unpolymerization may occur or a reaction rate may decrease. When the amount of the alkali metal catalyst exceeds 20 parts by weight, a low-molecular-weight polymer may be generated. Therefore, the above range is preferable.

In addition, according to the present invention, the end-capping agent is added so as to suppress side reaction generated by anionic polymerization and prevent a gelation phenomenon and includes at least one selected from the group consisting of compounds represented by Formulae 1 and 2.

[Formula 1] R₁(CH₂)ₓR₂(CH₂)_{y}R₃

R₁, R₂, and R₃ are each independently a primary, secondary, tertiary, or quaternary amine, alcohol, amide, ether, alkyl, or aryl, and x, y, or z is an integer from 1 to 20.

[Formula 2] R₁(CH₂)xR₂(CH₂)_{y}R₃(CH₂)_{z}R₄

R₁, R₂, R₃, and R₄ are each independently a primary, secondary, tertiary, or quaternary amine, alcohol, amide, ether, alkyl, or aryl, and x, y, or z is an integer from 1 to 20.

According to the present invention, the end-capping agent may be included at a molar ratio of 0.001 to 0.5 based on 1 mole of the entire lactam. The end-capping agent may be included at a molar ratio of preferably 0.001 to 0.3, and more preferably 0.001 to 0.25.

In this case, when the catalyst is added at a molar ratio of less than 0.001, a gelation problem caused by side reaction may occur. When the molar ratio of the catalyst exceeds 0.5, polymerization may not be performed, or a conversion rate may be extremely low even though the polymerization is performed. Therefore, the above range is preferable.

According to the present invention, when the end-capping agent is an amine-based material, an N/C ratio may be in a range of 0.05 to 1.0. The N/C ratio may be in a range of preferably 0.1 to 0.75, and more preferably 0.15 to 0.7.

When the end-capping agent is a urea-based material, an N/C ratio may be in a range of 0.05 to 1.0. The N/C ratio may be in a range of preferably 0.1 to 0.8, and more preferably 0.15 to 0.75.

When the end-capping agent is an alcohol-based material, an O/C ratio may be in a range of 0.05 to 1.0. The O/C ratio may be in a range of preferably 0.1 to 0.8, and more preferably 0.15 to 0.75.

In some cases, according to the present invention, a molecular weight controller may be included. The molecular weight controller may be preferably ethylene-bis-stearamide (EBS), but the present invention is not limited thereto. The molecular weight controller may include at least one selected from the group consisting of an amine compound, a urea compound, and a di-urea compound.

According to the present invention, an amount of the molecular weight controller may be in a range of 0.3 parts by weight to 10 parts by weight based on 100 parts by weight of the entire laurolactam. The amount of the molecular weight controller may be in a range of preferably 0.4 parts by weight to 7.0 parts by weight, and more preferably 0.5 parts by weight to 3.0 parts by weight.

In this case, when the molecular weight controller is added in an amount of less than 0.3 parts by weight, a high-molecular-weight polymer may be generated or a gelation problem may occur. When the amount of the molecular weight controller exceeds 10 parts by weight, a low-molecular-weight polymer may be generated or unpolymerization may occur. Therefore, the above range is preferable.

Finally, according to the present invention, the activator may be preferably carbon dioxide (CO2), but the present invention is not limited thereto. For example, the activator may include at least one selected from the group consisting of benzoyl chloride, N-acetyl caprolactam, N-acetyl laurolactam, octadecyl isocyanate (SIC), toluene diisocyanate (TDI), hexamethylene diisocyanate (HDI), and any mixture thereof.

In this case, when carbon dioxide is used as the activator, a very high reactivity may cause overpolymerization or side reaction. Therefore, as shown in FIG. 1, the reaction does not occur when the end-capping agent according to the present invention is introduced, thereby preventing side reaction and the like from occurring during anionic polymerization of lactam and making it possible to produce a uniform product.

According to the present invention, an amount of the carbon dioxide may be in a range of 0.002 parts by weight to 1.0 part by weight based on 100 parts by weight of the entire laurolactam. The amount of the carbon dioxide may be in a range of preferably 0.005 parts by weight to 5 parts by weight, and more preferably 0.01 parts by weight to 0.1 parts by weight.

In this case, when the carbon dioxide is added in an amount of less than 0.002 parts by weight, unpolymerization may occur or a reaction rate may decrease. When the amount of the carbon dioxide exceeds 1.0 part by weight, a gelation problem may occur. Therefore, the above range is preferable.

Hereinafter, preferred examples are presented so as to help the understanding of the present invention. However, the following examples are for illustrative purposes only and the present invention is not limited by the following examples.

### [Examples]

### <Example 1>

### Production of polymerization sample using hexamethylenediamine as end-capping agent (ECA)

1 mol% of a conventional initiator NaH was mixed with 20 g of lactam and added to an RB flask. The mixture was heated to 165°C in a nitrogen atmosphere and sufficiently kneaded for 30 minutes. Then, 0.25 mol% of hexamethylenediamine, which was previously melted using a syringe, was injected and heated to a reaction temperature while kneading. When the reaction temperature was reached, nitrogen was cut off and carbon dioxide (CO2) was injected as an activator to perform the reaction. When the reaction was completed, a solution in which formic acid and distilled water were mixed at a ratio of 1:1 (v) was injected to remove activated anion. Then, a sample having content shown in Table 1 was collected. The sample prepared as above was washed with distilled water and dried in a vacuum oven at 100°C for 24 hours. Then, a weight of polyamide was measured. and it was put in ethanol as a solvent for 8 hours. Then, after re-drying, a weight was measured to obtain a conversion rate. A result thereof is shown in Table 2.

**[Table 1]**

| | Lactam (g) | Alkali metal (mol%) | End-capping agent (mol%) | Activator | |
|---|---|---|---|---|---|
| | | | | Amount of CO₂ (ml) | Amount of NAC (ml) |
| Example 1 | 20 | 1 | 0.25 | 1.7 | |
| Example 2 | 20 | 1 | 0.125 | 1.7 | |
| Example 3 | 20 | 1 | 0.125 | 1.7 | - |
| Example 4 | 20 | 1 | 0.25 | - | 0.14 |
| Comparative Example 1 | 20 | 1 | - | 1.7 | |

### <Example 2>

A polyamide was produced in the same manner as in Example 1, except that dodecylamine was used as an end-capping agent.

### <Example 3>

A polyamide was produced in the same manner as in Example 1, except that dodecanol was used as an end-capping agent.

### <Example 4>

A polyamide was produced in the same manner as in Example 1, except that 1 mol% of N-acetyl caprolactam was used as an activator.

### [Comparative Example]

### <Comparative Example 1>

A polyamide was produced in the same manner as in Example 1, except that an end-capping agent (ECA) was not used. A conversion rate was obtained, and a result thereof is shown in Table 2.

**[Table 2]**

| | Molecular weight (g/mol) | Polydispersity index (PDI) | Conversion rate (%) |
|---|---|---|---|
| Example 1 | 73,500 | 2.2 | 98.4 |
| Example 2 | 69,700 | 2.2 | 98.1 |
| Example 3 | 71,800 | 2.3 | 98.9 |
| Example 4 | 77,300 | 2.3 | 98.4 |
| Comparative Example 1 | 1,254,000 | No measurement | Gelation |

As shown in Table 2, Example 4 in which the end-capping agent was included with respect to the lactam and NAC was used as the activator had a slightly lower molecular weight and a wide molecular weight distribution, compared with Examples 1, 2, and 3.

In addition, Comparative Example in which the end-capping agent was not included with respect to the lactam exhibited a gelation phenomenon such that a very high molecular weight and a molecular weight distribution could not be measured, compared with Example 1.

Although the present invention has been described with reference to the drawings according to embodiments of the present invention, it will be understood by those of ordinary skill in the art that various applications and modifications can be made thereto without departing from the scope of the present invention.

## Claims

1. A method for producing a polyamide by an anionic polymerization reaction using an end-capping agent, wherein lactam, and based on 100 parts by weight of the entire lactam, 0.01 parts by weight to 20 parts by weight of an alkali metal as an initiator, 0.002 parts by weight to 1.0 part by weight of an activator, and 0.1 parts by weight to 100 parts by weight of an amine-based, urea-based, or alcohol-based end-capping agent are included.

2. The method of claim 1, wherein the end-capping agent comprises at least one selected from the group consisting of compounds represented by Formulae 1 and 2:
[Formula 1] R₁(CH₂)ₓR₂(CH₂)_{y}R₃
wherein R₁, R₂, and R₃ are each independently a primary, secondary, tertiary, or quaternary amine, alcohol, amide, ether, alkyl, or aryl, and x, y, or z is an integer from 1 to 20,
[Formula 2] R₁(CH₂)ₓR₂(CH₂)_{y}R₃(CH₂)_{z}R₄
wherein R₁, R₂, R₃, and R₄ are each independently a primary, secondary, tertiary, or quaternary amine, alcohol, amide, ether, alkyl, or aryl, and x, y, or z is an integer from 1 to 20.

3. The method of claim 1, wherein the polymerization is performed in a temperature range of 140°C to 250°C.

4. The method of claim 1, wherein the activator comprises at least one selected from the group consisting of carbon dioxide (CO₂), benzoyl chloride, N-acetyl caprolactam, N-acetyl laurolactam, octadecyl isocyanate (SIC), toluene diisocyanate (TDI), hexamethylene diisocyanate (HDI), and any mixture thereof.

5. The method of claim 1, wherein the end-capping agent comprises at least one selected from the group consisting of aliphatic amine, aromatic amine, aliphatic urea, aromatic urea, aliphatic alcohol, and aromatic alcohol-based compounds.

6. The method of claim 5, wherein the end-capping agent comprises 0.001 mol% to 1.0 mol% relative to 1 mol of the lactam.

7. The method of claim 1, wherein an N/C ratio of the amine-based or urea-based end-capping agent is in a range of 0.05 to 1.0.

8. The method of claim 1, wherein an O/C ratio of the alcohol-based end-capping agent is in a range of 0.05 to 1.0.

9. The method of claim 1, wherein the alkali metal comprises at least one selected from the group consisting of metal hydride, metal hydroxide, and metal alkoxide.

10. The method of claim 1, wherein at least one selected from the group consisting of ethylene-bis-stearamide (EBS), an amine compound, a urea compound, and a di-urea compound, which are a molecular weight controller, is further included.

11. The method of claim 1, wherein the polymerization reaction is performed in a range of 0.5 minutes to 120 minutes.

12. The method of claim 1, wherein the lactam in the polymerization reaction has a conversion rate of 95% or more.

13. A polyamide produced by the method of any one of claims 1 to 12.

14. The polyamide of claim 13, wherein the polyamide has a polydispersity index (PDI) of 3.0 or less.

15. The polyamide of claim 13, wherein a weight average molecular weight (Mw) of the polyamide is in a range of 20,000 to 80,000.

16. A parts material selected from the group consisting of a vehicle material, an electronic device material, an industrial pipe material, a construction engineering material, a 3D printer material, a textile material, a cladding material, a machine tool material, a medical material, an aviation material, a photovoltaic material, a battery material, a sports material, a household appliance material, a household material, and a cosmetic material, which each include the polyamide of claim 13.
